# EUROPEAN PATENT SPECIFICATION

(11) **EP 3 214 407 B1**
(45) Date of publication and mention of the grant of the patent: **04.11.2020**
(21) Application number: 16158085.7
(22) Date of filing: 01.03.2016
(51) Int. Cl.: G01C 21/36, G08G 1/0968, G08G 1/01, G08G 1/015

(54) **NAVIGATION APPARATUS AND METHOD FOR PROVIDING LANE USE INSTRUCTION**
NAVIGATIONSVORRICHTUNG UND VERFAHREN ZUR BEREITSTELLUNG VON FAHRSPURNUTZUNGSANWEISUNG
APPAREIL DE NAVIGATION ET PROCÉDÉ POUR FOURNIR UNE INSTRUCTION D'UTILISATION DE VOIE

(43) Date of publication of application: 06.09.2017
(73) Proprietor: Alpine Electronics, Inc., Tokyo (JP)
(72) Inventor: PARLIC, Novica, 70567 Stuttgart (DE)
(74) Representative: Schmitt-Nilson Schraud Waibel Wohlfrom Patentanwälte Partnerschaft mbB

(56) References cited:
- EP-A2- 2 228 779
- DE-A1-102012 022 629
- US-A1- 2014 032 098

## Description

The present invention is related to a navigation apparatus and method for providing a lane use instruction to a user.

Some navigation apparatuses and methods are known in the art which provide an aid to the user of a vehicle to select and use a particular lane of a multi-lane road, e.g. when exiting a road or when selecting the right lane for an intended change of direction.

JP 2012-154951 A discloses a tollgate situation output system which includes two or more tollgates and a gate information output unit comprising a gate situation detection section which detects gate types and availability situations specifying a possibility of charging processing using ETC on-vehicle units set to the two or more tollgates, and an information transmission section which transmits gate information based on the detected gate types and availability situations. The tollgate situation output system further includes a gate information receiving unit (navigation system) having a recording section which records the gate information, a control section which determines whether the gate information recorded by the recording section is the latest gate information, and an output section which outputs the gate types and the availability situations when the gate information is the latest gate information, and outputs the gate types when the gate information is not the latest gate information.

US 2009/0299618 A1 provides a method for operating a navigation device, which also receives TMC data using two tuners for ascertaining an optimum travel route. After a first search by the second tuner, the TMC data found are compared with those of the first tuner and the second tuner is used for searching for another transmitter having other TMC data. TMC data of another country may be received by one of the two tuners, in particular when approaching an international border. For example, when getting within 50 kilometers of an international border, which is to be crossed according to the travel route calculation, the navigation device should automatically start looking for TMC data from the next country using one of the two tuners. In the same way, the navigation device may estimate a time to crossing the international border using the average speed and the distance to the border and, for example, start collecting TMC data half an hour before crossing the border.

In US 2013/0275033 A1 lane speed profiles are determined for each of a plurality of individual lanes of a multi-lane road section. The lane speed profiles are determined using real-time vehicle probe data. The speed profiles are used to determine a timing for provide an instruction to a user of a navigation apparatus to change lane. The timing may be determined to provide a quickest route through at least a part of the road section, to increase the time available for the user to perform the lane change, or to enable a user to pass an incident affecting a lane most quickly. Other information may be used in addition to the lane speed information to determine the timing of the lane selection instruction. For example, information regarding lane usage restrictions for the road section, or information regarding lane manoeuvre restrictions for the road section etc. may be taken into account. For example, in some road sections it may not be possible to change back to a first lane after moving into a second lane from the first lane, e.g. when the second lane is an exit lane. In other arrangements, certain lanes may be specifically designated for certain types of vehicle.

A particular situation arises when a vehicle approaches a multi-lane terminal section of a road, such as a border station or a road toll station or tollgate having multiple lanes. Such terminal sections of a road are susceptible to traffic jams, in particular during holiday seasons or commuter times when a high number of vehicles approach and pass the terminal section. Such terminal sections typically have a plurality of lanes, with some of the lanes having different use permissions for the user or vehicle to pass through. For example, border stations in Europe may have lanes for vehicles registered in the EU (European Union) and/or passengers of the EU, which are typically faster in traffic throughput than other lanes for non-EU vehicles/passengers, for example resulting from faster passport checking procedures. At toll stations, for instance, there are typically lanes for vehicles with prepaid badges or direct debiting of the amount to be paid, and other lanes for cash payment which are lower in traffic throughput than the lanes for prepaid badges or direct debiting.

Such differences in throughput typically result in considerable time differences for the user when approaching a traffic jam at such terminal section and passing the terminal section on a particular lane. For example, the user may lose considerable time if he selects to use the non-EU vehicle lane at far distance from the border station although he could have used the lane for EU vehicles. Another situation may arise in which, for whatever reason, at a tollgate one of the badge lanes is closed at the location of the tollgate, so that the vehicles of this closed badge lane need to change to the open badge lane, which may result in traffic jam and considerable time needed to pass through the open badge lane since the cars approaching the tollgate using two or more lanes have to pass through one lane at the tollgate. In such situation, it would have been better for some vehicles having badges to use one of the cash payment lanes if these lanes have lower traffic volume. A situation vice versa, on the other hand, would not be possible since vehicles having no badge are not permitted to use the badge lane of the tollgate.

US 2014/032098 A1 discloses a navigation device which comprises a processor coupled with a display to communicate prompts to a driver of a vehicle, wherein the processor is configured to receive an input representative of a number of sensed passengers in the vehicle, to receive an input representative of a sensed lane of a road in which the vehicle is travelling, and to determine if the vehicle is eligible to travel through one or more high-occupancy vehicle (HOV) lanes based on the number of sensed passengers and the HOV lane data. The navigation device may provide a prompt to the display that one or more HOV lanes are available if the vehicle is eligible to travel through the one or more HOV lanes but is not currently travelling through such HOV lane. In addition, the processor may check the input from a traffic flow sensor to determine the rate of traffic flow for the HOV lane versus any adjacent non-HOV lanes. If the traffic is flowing more quickly in the HOV lane, then the processor may provide a prompt to the display to alert the driver that an HOV lane is available and that the traffic is flowing more quickly in the HOV lane.

DE 10 2012 022629 A1 discloses a method for guiding a motor vehicle when reaching a road toll collecting station on highways, which involves automatically selecting a suitable lane, and guiding a motor vehicle to the selected lane. To this end, the motor vehicle communicates with a road toll collecting station for automatic selection of the lane. The motor vehicle evaluates the received information transmitted from the road toll collecting station, such as information about temporarily open and closed lanes or suitable payment method (cash payment or electronic payment) in the respective lane. The aim is to accelerate the passing time through the road toll station.

It is an object of the invention to provide a navigation apparatus and method for providing a lane use instruction to a user which are capable of reducing the travelling time for the user when approaching and passing a multi-lane terminal section of a road which comprises a border station between two jurisdictions.

The invention relates to a navigation apparatus and method according to the independent claims. Embodiments are disclosed herein in the following description and in the dependent claims.

According to an aspect, there is provided a navigation apparatus comprising a map data receiving device for receiving map data containing information regarding lanes of a multi-lane terminal section of a road, wherein the lanes have a same direction of travel, and a processing device which is configured to determine traffic flow information for individual ones of the lanes of the multi-lane terminal section. The processing device is configured to determine for individual ones of the lanes whether they are restricted for use by a vehicle involving a lane usage restriction criterium for the respective lane. The multi-lane terminal section of the road comprises a border station between two jurisdictions. The processing device is configured to retrieve data and to determine vehicle information from the retrieved data which is indicative of at least one of the following regarding a vehicle the user of the navigation apparatus is using: a jurisdiction of registration of the vehicle, a permission of use of the vehicle, number of persons in the vehicle, a size of the vehicle, a weight of the vehicle. The processing device is further configured to determine a vehicle use permission information for the vehicle for individual ones of the lanes, wherein for restricted ones of the lanes the determination takes into account the vehicle information and the lane usage restriction criterium for the respective lane. The processing device is configured to determine at least one of the lanes for use by the user according to the vehicle use permission information and traffic flow information, and to provide a corresponding lane use instruction to the user.

According to another aspect, there is provided a method comprising the steps of:
- receiving map data containing information regarding lanes of such multi-lane terminal section of a road, wherein the lanes have a same direction of travel,
- determining for individual ones of the lanes whether they are restricted for use by a vehicle involving a lane usage restriction criterium for the respective lane,
- retrieving data and determining vehicle information from the retrieved data which is indicative of at least one of the following regarding a vehicle the user is using: a jurisdiction of registration of the vehicle, a permission of use of the vehicle, number of persons in the vehicle, a size of the vehicle, a weight of the vehicle,
- determining a vehicle use permission information for individual ones of the lanes, wherein for restricted ones of the lanes the determination takes into account the vehicle information and the lane usage restriction criterium for the respective lane,
- determining traffic flow information for individual ones of the lanes, and
- determining at least one of the lanes for use by the user according to the vehicle use permission information and traffic flow information, and providing a corresponding lane use instruction to the user.

The processing device is configured to retrieve information which jurisdictions are concerned by the border station. For example, information is retrieved which countries or multi-national jurisdictions, such as the European Union, are involved with the border station.

Accordingly, one or more lane use instructions may be provided to a user which may contribute to reducing the travelling time for the user when approaching and passing such a multi-lane terminal section of a road. In particular, the navigation apparatus evaluates vehicle information which may change dynamically during travel or lifetime of the vehicle and compares that vehicle information with one or more lane usage restriction criteria for a respective lane. If the vehicle information indicates that the vehicle does not comply with the lane usage restriction criterium for the respective lane, this lane will not be taken into account when determining the lane use instruction, i.e. this lane will not be proposed to the user by the processing device. For example, if a lane is restricted for use by vehicles having more than one person travelling in the vehicle, and the vehicle information indicates that only one person is in the vehicle, this lane will not be proposed to the user. As this vehicle information may change during travel, for instance if another passenger enters the vehicle, this change may be detected by the processing device and the lane determination may change accordingly so that lanes that were restricted for the vehicle previously are now taken into account. An analogous situation may arise analogously between border stations if the vehicle is sold and registered in another country. Such dynamic change of vehicle information may be taken into account, so that the user may always be provided with tailored lane use instructions when approaching such multi-lane terminal stations of a road.

According to an embodiment, the processing device is configured to determine the traffic flow information using real time data.

For example, the processing device is configured to determine the traffic flow information from at least one of the following: cell phone data, vehicle detection data, and vehicle speed detection data.

According to an embodiment, the traffic flow information is indicative of a loss of time for the user when using the respective lane of the multi-lane terminal section.

According to an embodiment, the processing device is configured to determine the traffic flow information for one of the lanes taking into account traffic restriction information for an adjacent lane of the one of the lanes. For example, if lanes are reduced in number after some distance, based on this information it should be taken into account that at the adjacent left and right lanes of a closed lane the speed will probably be reduced as the vehicles on the closed lane need to change the lane, which may cause traffic jam.

According to an embodiment, the navigation apparatus further includes a storing device for storing the data to be retrieved by the processing device. In this way, the vehicle information may be stored and adapted dynamically in the navigation apparatus, for example may be entered by the user once or when starting travelling through a user interface.

According to another embodiment, the lane usage restriction criterium is indicative of at least one of the following: a jurisdiction of registration of the vehicle, permission of use of the vehicle to use the respective lane, diplomatic permission for border cross, number of persons travelling in the vehicle, a size of the vehicle, a weight of the vehicle.

According to an embodiment, retrieving the data and determining the vehicle information is performed multiple times during use of the vehicle, particularly multiple times during travel or lifetime of the vehicle.

Advantageously, the data may be retrieved from a storing device of the vehicle and are updated in the storing device dynamically during a travel and/or during lifetime of the vehicle.

According to another aspect, the invention relates to a vehicle comprising a navigation device according to embodiments of the invention.

Aspects and embodiments of the invention will now be described in more detail with reference to the drawings in which:
- Fig. 1: shows an example configuration of a navigation apparatus according to an embodiment of the invention,
- Fig. 2: shows a schematic view of an exemplary multi-lane border station according to an embodiment,
- Fig. 3: shows a flow chart of a method according to an embodiment of the invention according to a first aspect,
- Fig. 4: shows a flow chart of a method according to an embodiment of the invention according to a further aspect,

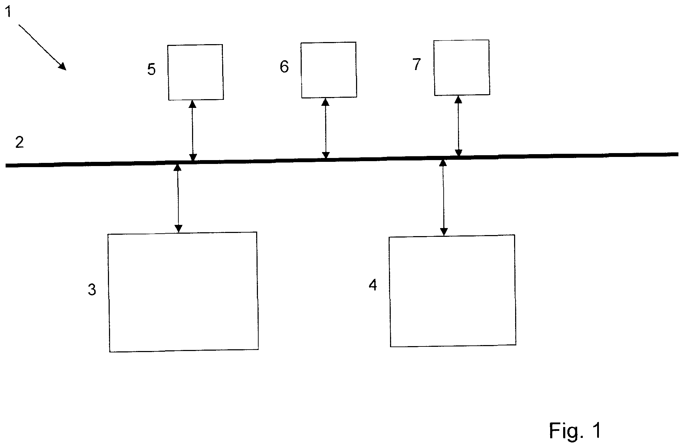

Fig. 1 shows an example configuration of a navigation apparatus according to an embodiment of the invention. The navigation apparatus 1 may be installed in a vehicle, such as a car, or may be a mobile navigation apparatus for use in various vehicles. An example configuration comprises a communications bus 2 which is coupled with various components, such as a processing device 3 and a display device 4 for showing map data and user instructions. For example, the processing device 3 may be or comprise a microprocessor, such as a central processing unit (CPU), which is used for control and data processing of the navigation apparatus, calculation and display of map data and/or calculation of routes to a destination, etc. The processing device may also be a distributed system and/or may communicate with components outside the navigation apparatus for performing the respective function. The display device 4 may be or comprise a screen, such as a touch screen, which may be used for displaying map data and user instructions to the user and may also be used as input interface for receiving user instructions.

The communications bus 2 may further be coupled with a map data receiving device 5 which receives map data, e.g., from a map data storage device included in or connected with the navigation apparatus (such as a DVD or non-volatile memory device) or from a remote map data storage device (such as from a remote server via the Internet) coupled with the navigation apparatus. The map data receiving device 5 may be, for instance, a terminal coupled to a map data storage device or a modem for wired and/or wireless communication with a map data storage device. A storage device 6 may be used to store dynamically changeable data regarding vehicle information to be used by the processing device 3, as explained in more detail below. The navigation apparatus 1 may include further components, such as a position sensor 7 for communication via satellite for determining a vehicle position, or other components not shown in Fig. 1 common in known navigation apparatuses.

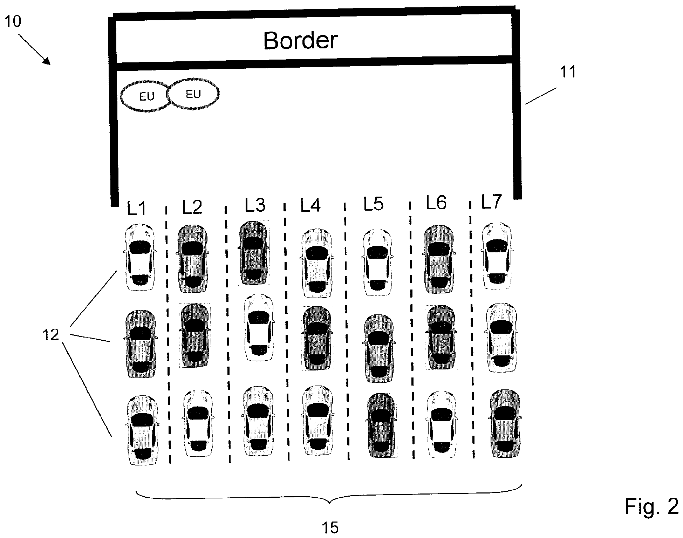

In the following, an embodiment of the invention will be described with reference to the Figures 2 to 4. In particular, a situation is described in which a vehicle, such as a car, is approaching a multi-lane terminal section 10 of a road 15, for example as shown in Fig. 2 having a border station 11 with a plurality of lanes L1 to L7. The lanes L1-L7 have the same direction of travel and may, in principle, be used by various types of vehicles, such as cars, trucks, motorbikes, etc. In the present example, the lanes L1-L7 are used by cars 12 which are lined up in a queue per each respective lane and want to pass the border station 11.

A multi-lane terminal section of a road comprising a border station may be, in principle, any section of a road in which one or more terminals are located for serving or checking vehicles and/or persons travelling in the vehicles passing by for particular conditions, inquiries or requirements. The terminal(s) may be serviced by persons being present in or at the terminals, or may be automatic terminal(s) with appropriate equipment, such as cameras, chip card readers, passport readers, or badge scanners. The one or more terminals are located within a road section which has multiple lanes for approaching the terminal(s).

Some of the lanes L1-L7 may be restricted for use by a vehicle. Such use restriction may involve a lane usage restriction criterium for the respective lane. A lane usage restriction criterium may be indicative of a permission of use for a vehicle complying with a particular condition. It may be positively or negatively defined, e.g. indicative of a permission of use for a vehicle complying or not complying with a particular condition, or indicative of a prohibition of use for a vehicle complying or not complying with a particular condition.

For example, a lane usage restriction criterium may be indicative of at least one of the following: a jurisdiction of registration of the vehicle (such as registered in EU or non-EU), permission of use of the vehicle to use a respective lane L1-L7 (such as permission shown by a badge permitting the use of a certain type of road or the passing through of a tollgate), diplomatic permission for border cross, number of persons travelling in the vehicle, a size of the vehicle, or a weight of the vehicle. In the present example of Fig. 2, the lanes L1, L2 are restricted for use by vehicles registered in the EU. Such information may be stored, for example, in the storage device 6 of the navigation apparatus 1 as shown in Fig. 1, and may be entered by the user once when purchasing the car, before or during travel, or when there is any change of permission or vehicle information (such as a change of number of persons), for example when buying a badge or acquiring a special permission. The other lanes L3-L7 are not restricted.

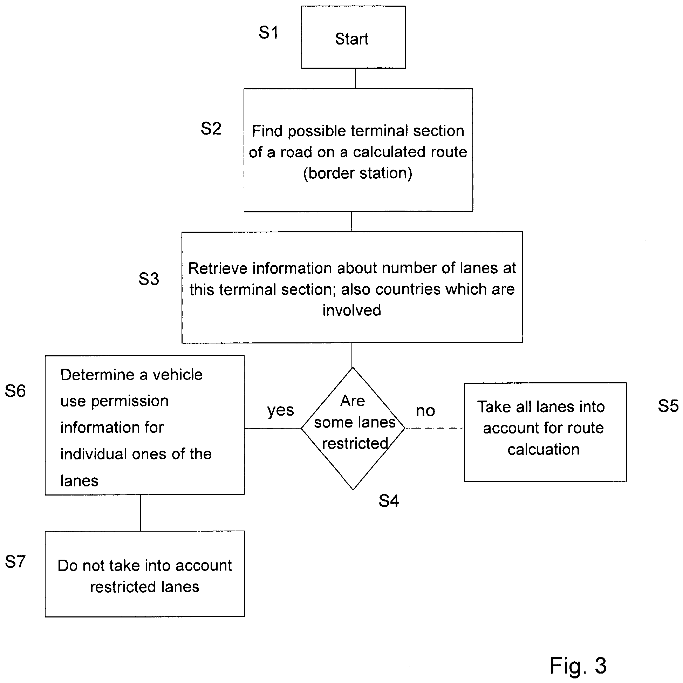

Referring now to Fig. 3, an embodiment of the method starts at step S1. In step S2, a possible terminal section of a road is determined on a calculated route (i.e., a border station) on which the vehicle is travelling. In step S3, information is retrieved about number of lanes at this terminal section. In the present case, terminal section 10 is determined having seven lanes L1-L7. If it is a border station, like in the present case, it is further determined which jurisdictions (e.g. EU territory, non-EU territory, countries) are involved. For example, it is determined that country A is one side and country B is on other side of the border station 11.

In step S4, it is determined whether some of the lanes are restricted in use for all or some vehicles falling under a particular lane usage restriction criterium. In step S5, if there is no restriction of use, all lanes are taken into account for route calculation and determining a lane use instruction to the user. In step S6, however, if one or more of the lanes are restricted in use, a vehicle use permission information for individual ones of the lanes is determined. For example, in step S4 it is determined that lanes L1 and L2 are restricted for use by EU-registered vehicles only. According to step S7, these lanes are not taken into account for route calculation and determining a lane use instruction to the user.

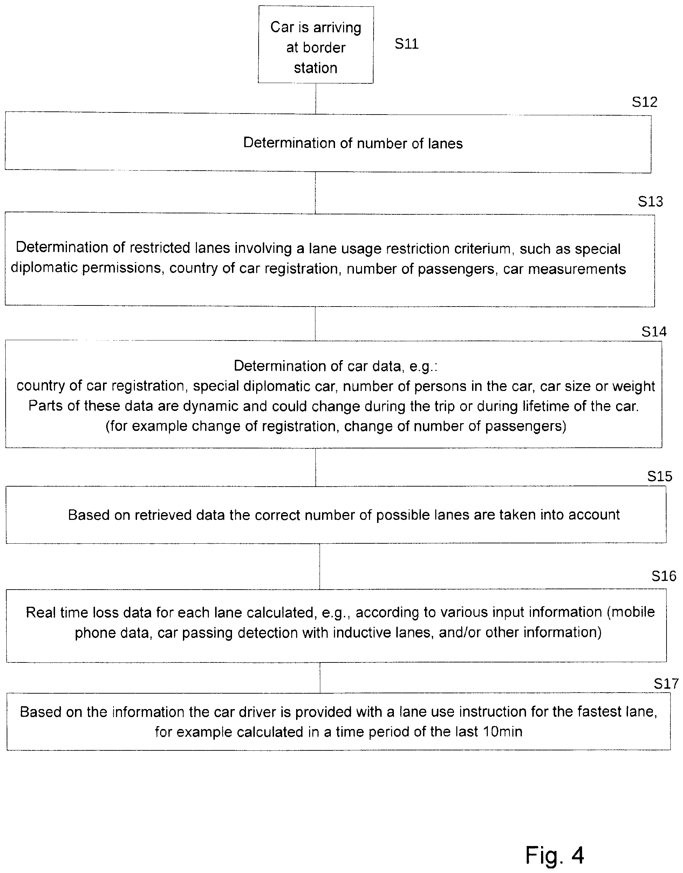

In Fig. 4, an embodiment of a method for providing a lane use instruction to the user is described. In step S11, a vehicle such as a car is arriving at a border station, such as border station 11 according to Fig. 1. In step S12, the number of lanes of this terminal section of a road is determined. In step S13, a determination of restricted lanes is made which involve a lane usage restriction criterium, such as special diplomatic permissions, country of car registration, number of persons travelling in the car, or car measurements.

In step S14, the processing device 3 retrieves data from storage device 6, e.g. entered by the user previously in storage device 6, and determines vehicle information from the retrieved data which is indicative of at least one of the following regarding the vehicle the user of the navigation apparatus is using: a jurisdiction of registration of the vehicle (e.g. country of registration), a permission of use of the vehicle (e.g., whether there is a badge or other data/document which indicates permission for passing a border, or using a particular type of road, or allowance for border cross, or using a particular lane, or diplomatic permission), number of persons in the vehicle, a size of the vehicle, or a weight of the vehicle. For instance, vehicle data are retrieved, such as country of car registration, data indicative of a special diplomatic car, number of persons in the car, car size or weight. At least portions of these data are dynamic and could be changed during the trip or during lifetime of the vehicle (for example change of registration, change of number of persons travelling in the vehicle). For example, the number of persons in the car may be determined automatically, e.g. through detection by one or more seat sensors or by detecting human body temperature. Other vehicle information may also be determined automatically without triggered by the user, for example through appropriate wired or wireless data reading devices and/or sensors, e.g. at certain intervals.

In step S15, the processing device 3 determines a vehicle use permission information for individual ones of the lanes. Analogously to the lane usage restriction criterium for a respective lane, as described above, the vehicle use permission information for a respective lane may be positively or negatively defined, e.g. indicative of a permission of use for a vehicle or indicative of a prohibition of use for a vehicle.

At least for the restricted ones of the lanes the determination takes into account the retrieved vehicle information and the lane usage restriction criterium for the respective lane. If the determination detects that the vehicle information does not comply with or correspond to the respective lane usage restriction criterium, the respective lane will be designated accordingly with a vehicle use permission information and not be taken into account. Such information may be indicated, for example, by a corresponding flag or data for a respective lane. For instance, the flag may be "true" if use by the vehicle is permitted, and may be "false" if use by the vehicle is not permitted. In this way, based on the retrieved vehicle data the correct number of possible lanes are taken into account for the determination of a lane use instruction. For example, the lanes L1 and L2 are not taken into account for vehicles not registered in the EU, since the vehicle information "non-EU registered vehicle" does not comply with the lane usage restriction criterium "use only by EU registered vehicles". According to another example, if only one person is travelling in the vehicle, lanes which are restricted for use by vehicles with two or more persons are not taken into account.

In step S16, traffic flow information is determined by the processing device 3 for individual ones of the lanes. This can be done in various ways and by various means. For example, real time loss data for each lane is calculated according to various input information, such as mobile phone data, car passing detection, or other information. According to another example, average vehicle speed for each lane may be calculated. Means for detecting may include, but are not limited to, speed sensors, cameras, radar devices, vehicle detection sensors (such as inductive sensors integrated in the road surface), light barrier sensors, etc. Traffic flow information may be collected and/or processed in various forms, such as travel time needed for a certain distance or for reaching the border station, and/or time loss for reaching the border station compared to a situation in which no vehicles are on the respective lane, etc. A potential traffic flow information may be, for example: In 30 minutes 20 cars pass lane L2 , in 30 minutes 10 cars pass lane L5 , in 30 minutes 8 cars pass lane L4 . In principle, any suitable time period in the past can be taken as a basis for calculating the traffic flow.

In step S17, the processing device 3 determines at least one of the lanes for preferred use by the user according to the vehicle use permission information determined in step S15 and traffic flow information determined in step S16, and to provide a corresponding lane use instruction to the user. For example, it the user is approaching the border station 11 in lane L3, which turns out to be quite slow, the processing device 3 determines, e.g., lane L4 for preferred use by the user according to the vehicle use permission information and traffic flow information, and provides a corresponding lane use instruction to the user indicating that the user should change to lane L4. In this way, the car driver may be provided with a lane use instruction for the fastest lane, for example calculated for a time period of the last 10 minutes. Restricted lanes L1 and L2 are not taken into account for a car not registered in the EU.

A lane use instruction may be provided to the user in any suitable way, such as by displaying an instruction in text form and/or in graphical manner on the display device 4 and/or by acoustical announcement. For example, an arrow could indicate a change from lane L3 to lane L4 in a map depiction on the display device 4 as shown in Fig. 2. A lane use instruction is, in principle, an indication of a lane to the user determined by the processing device for use by the user (or the user's vehicle, respectively).

Benefits of the invention are that the driver is relieved from the decision to select the right/fastest lane in a traffic jam in advance of a terminal section of a road to minimize the travel time needed to pass the terminal section. Further, the driver has confidence that the navigation system knows which one of the lanes is the fastest lane, and that the driver is confident to select the right lane in case of special lane usage restrictions .
Generally, a lane is a part of a road which is intended to be used by a single line of vehicles. A road typically has at least two lanes, one for travel in each direction. Terminal sections of roads, such as border stations, typically have multiple lanes which are serviced by customs personnel separately. Lane changes may occur in order to follow the lane use instruction. Lane usage permission may vary in different road terminal sections and regions of the world. The lane guidance of the invention may be used in different circumstances, depending upon individual dynamically changeable vehicle information, local lane usage restrictions or customs.
While the present invention is described in terms of some specific examples and embodiments, the present invention is not limited to these examples and embodiments and the contents of the present invention should not be interpreted in a limited way. It will be clear that changes and modified embodiments will be evident to those skilled in the art without departing from the scope of the claims.

## Claims

1. A navigation apparatus (1) comprising
- a map data receiving device (5) for receiving map data containing information regarding lanes (L1-L7) of a multi-lane terminal section (10) of a road (15), wherein the lanes (L1-L7) have a same direction of travel, wherein the multi-lane terminal section (10) of the road (15) comprises a border station between two jurisdictions, and
- a processing device (3) which is configured to determine traffic flow information for individual ones of the lanes (L1-L7) of the multi-lane terminal section (10),
- wherein the processing device (3) is configured to retrieve information which jurisdictions are concerned by the border station (10) and to determine for individual ones of the lanes (L1-L7) whether they are restricted for use by a vehicle (12) involving a lane usage restriction criterium for the respective lane (L1-L7),
- wherein the processing device (3) is configured to retrieve data and to determine vehicle information from the retrieved data which is indicative of at least one of the following regarding a vehicle (12) the user of the navigation apparatus is using: a jurisdiction of registration of the vehicle, a permission of use of the vehicle, number of persons in the vehicle, a size of the vehicle, a weight of the vehicle,
- wherein the processing device (3) is configured to determine a vehicle use permission information for the individual ones of the lanes (L1-L7), wherein for restricted ones of the lanes (L1-L7) the determination takes into account the vehicle information and the lane usage restriction criterium for the respective lane,
- wherein the processing device (3) is configured to determine at least one of the lanes (L1-L7) for use by the user according to the vehicle use permission information and traffic flow information determined for the individual ones of the lanes (L1-L7), and to provide a corresponding lane use instruction to the user.

2. The navigation apparatus according to claim 1, wherein the processing device (3) is configured to determine the traffic flow information using real time data.

3. The navigation apparatus according to one of claims 1 to 2, wherein the processing device (3) is configured to determine the traffic flow information from at least one of the following: cell phone data, vehicle detection data, and vehicle speed detection data.

4. The navigation apparatus according to one of claims 1 to 3, wherein the traffic flow information is indicative of a loss of time for the user when using the respective lane (L1-L7) of the multi-lane terminal section (10).

5. The navigation apparatus according to one of claims 1 to 4, wherein the processing device (3) is configured to determine the traffic flow information for one of the lanes (L1-L7) taking into account traffic restriction information for an adjacent lane of the one of the lanes (L1-L7).

6. The navigation device according to one of claims 1 to 5, further including a storing device (6) for storing the data to be retrieved by the processing device (3).

7. A vehicle (12) comprising a navigation device (1) according to one of the preceding claims.

8. A method comprising the steps of:
- receiving map data containing information regarding lanes (L1-L7) of a multi-lane terminal section (10) of a road (15), wherein the lanes (L1-L7) have a same direction of travel, wherein the multi-lane terminal section (10) of the road (15) comprises a border station between two jurisdictions,
- retrieving information which jurisdictions are concerned by the border station (10) and determining for individual ones of the lanes (L1-L7) whether they are restricted for use by a vehicle (12) involving a lane usage restriction criterium for the respective lane,
- retrieving data and determining vehicle information from the retrieved data which is indicative of at least one of the following regarding a vehicle (12) the user is using: a jurisdiction of registration of the vehicle, a permission of use of the vehicle, number of persons in the vehicle, a size of the vehicle, a weight of the vehicle,
- determining a vehicle use permission information for the individual ones of the lanes (L1-L7), wherein for restricted ones of the lanes (L1-L7) the determination takes into account the vehicle information and the lane usage restriction criterium for the respective lane,
- determining traffic flow information for the individual ones of the lanes (L1-L7), and
- determining at least one of the lanes (L1-L7) for use by the user according to the vehicle use permission information and traffic flow information, and providing a corresponding lane use instruction to the user.

9. The method according to claim 8, wherein the lane usage restriction criterium is indicative of at least one of the following: a jurisdiction of registration of the vehicle (12), permission of use of the vehicle (12) to use the respective lane (L1-L7), diplomatic permission for border cross, number of persons travelling in the vehicle (12), a size of the vehicle (12), a weight of the vehicle (12).

10. The method according to claim 8 or 9, wherein retrieving the data and determining the vehicle information is performed multiple times during use of the vehicle (12).

11. The method according to one of claims 8 to 10, wherein retrieving the data and determining the vehicle information is performed automatically.

12. The method according to one of claims 8 to 11, wherein the data are retrieved from a storing device (6) of the vehicle (12) and are updated in the storing device (6) dynamically during a travel and/or during lifetime of the vehicle (12).

## Patentansprüche

1. Navigationsvorrichtung (1), aufweisend
- eine Kartendatenempfangsvorrichtung (5) zum Empfangen von Kartendaten, die Information bezüglich Fahrspuren (L1-L7) eines mehrspurigen Endabschnitts (10) einer Straße (15) enthalten, wobei die Fahrspuren (L1-L7) die gleiche Fahrtrichtung aufweisen, wobei der mehrspurige Endabschnitt (10) der Straße (15) eine Grenzstation zwischen zwei Gerichtsbarkeiten aufweist, und
- eine Verarbeitungsvorrichtung (3), die dazu ausgebildet ist, Verkehrsflussinformation für einzelne der Fahrspuren (L1-L7) des mehrspurigen Endabschnitts (10) zu bestimmen,
- wobei die Verarbeitungsvorrichtung (3) dazu ausgebildet ist, Information abzurufen, welche Gerichtsbarkeiten von der Grenzstation (10) betroffen sind, sowie für einzelne der Fahrspuren (L1-L7) zu bestimmen, ob sie für die Nutzung durch ein Fahrzeug (12) eingeschränkt sind, das ein Kriterium für eine Fahrspur-Nutzungsbeschränkung für die jeweilige Fahrspur (L1-L7) beinhaltet,
- wobei die Verarbeitungsvorrichtung (3) dazu ausgebildet ist, Daten abzurufen und Fahrzeuginformation aus den abgerufenen Daten zu bestimmen, die mindestens eine der folgenden Angaben in Bezug auf ein Fahrzeug (12) anzeigen, das der Benutzer der Navigationsvorrichtung nutzt: eine Gerichtsbarkeit der Registrierung des Fahrzeugs, eine Erlaubnis zur Nutzung des Fahrzeugs, die Anzahl der Personen im Fahrzeug, eine Größe des Fahrzeugs, ein Gewicht des Fahrzeugs,
- wobei die Verarbeitungsvorrichtung (3) dazu ausgebildet ist, Fahrzeugnutzungs-Erlaubnisinformation für die einzelnen der Fahrspuren (L1-L7) zu bestimmen, wobei die Bestimmung für eingeschränkte der Fahrspuren (L1-L7) die Fahrzeuginformation und das Kriterium der Fahrspur-Nutzungsbeschränkung für die jeweilige Fahrspur berücksichtigt,
- wobei die Verarbeitungsvorrichtung (3) dazu ausgebildet ist, mindestens eine der Fahrspuren (L1-L7) zur Nutzung durch den Benutzer nach Maßgabe der Fahrzeugnutzungs-Erlaubnisinformation und der Verkehrsflussinformation zu bestimmen, die für die einzelnen der Fahrspuren (L1-L7) bestimmt worden sind, sowie eine entsprechende Fahrspurnutzungsanweisung an den Benutzer bereitzustellen.

2. Navigationsvorrichtung nach Anspruch 1,
wobei die Verarbeitungsvorrichtung (3) dazu ausgebildet ist, die Verkehrsflussinformationen unter Nutzung von Echtzeitdaten zu bestimmen.

3. Navigationsvorrichtung nach einem der Ansprüche 1 bis 2,
wobei die Verarbeitungsvorrichtung (3) dazu ausgebildet ist, die Verkehrsflussinformation aus mindestens einer der folgenden Angaben zu bestimmen: Mobiltelefondaten, Fahrzeugdetektionsdaten und Fahrzeuggeschwindigkeitsdetektionsdaten.

4. Navigationsvorrichtung nach einem der Ansprüche 1 bis 3,
wobei die Verkehrsflussinformation einen Zeitverlust für den Benutzer anzeigt, wenn die jeweilige Spur (L1-L7) des mehrspurigen Endabschnitts (10) genutzt wird.

5. Navigationsvorrichtung nach einem der Ansprüche 1 bis 4,
wobei die Verarbeitungsvorrichtung (3) dazu ausgebildet ist, die Verkehrsflussinformation für eine der Fahrspuren (L1-L7) unter Berücksichtigung von Verkehrsbeschränkungsinformation für eine benachbarte Fahrspur von der einen der Fahrspuren (L1-L7) zu bestimmen.

6. Navigationsvorrichtung nach einem der Ansprüche 1 bis 5,
die ferner eine Speichervorrichtung (6) zum Speichern der von der Verarbeitungsvorrichtung (3) abzurufenden Daten aufweist.

7. Fahrzeug (12) mit einer Navigationsvorrichtung (1) nach einem der vorhergehenden Ansprüche.

8. Verfahren, das folgende Schritte aufweist:
- Empfangen von Kartendaten, die Information bezüglich Fahrspuren (L1-L7) eines mehrspurigen Endabschnitts (10) einer Straße (15) enthalten, wobei die Fahrspuren (L1-L7) die gleiche Fahrtrichtung aufweisen, wobei der mehrspurige Endabschnitt (10) der Straße (15) eine Grenzstation zwischen zwei Gerichtsbarkeiten aufweist;
- Abrufen von Information, welche Gerichtsbarkeiten von der Grenzstation (100) betroffen sind, sowie Bestimmen für einzelne der Fahrspuren (L1-L7), ob sie für die Nutzung durch ein Fahrzeug (12) eingeschränkt sind, das ein Kriterium für eine Fahrspur-Nutzungsbeschränkung für die jeweilige Fahrspur (L1-L7) beinhaltet,
- Abrufen von Daten und Bestimmen von Fahrzeuginformation aus den abgerufenen Daten, die mindestens eine der folgenden Angaben in Bezug auf ein Fahrzeug (12) anzeigen, das der Benutzer nutzt: eine Gerichtsbarkeit der Registrierung des Fahrzeugs, eine Erlaubnis zur Nutzung des Fahrzeugs, die Anzahl der Personen im Fahrzeug, eine Größe des Fahrzeugs, ein Gewicht des Fahrzeugs,
- Bestimmen von Fahrzeugnutzungs-Erlaubnisinformation für die einzelnen der Fahrspuren (L1-L7), wobei die Bestimmung für eingeschränkte der Fahrspuren (L1-L7) die Fahrzeuginformation und das Kriterium der Fahrspur-Nutzungsbeschränkung für die jeweilige Fahrspur berücksichtigt,
- Bestimmen von Verkehrsflussinformation für die einzelnen der Fahrspuren (L1-L7), und
- Bestimmen von mindestens einer der Fahrspuren (L1-L7) für die Nutzung durch den Benutzer nach Maßgabe der Fahrzeugnutzungs-Erlaubnisinformation und der Verkehrsflussinformation, sowie Bereitstellen einer entsprechenden Fahrspurnutzungsanweisung für den Benutzer.

9. Verfahren nach Anspruch 8,
wobei das Kriterium der Fahrspur-Nutzungsbeschränkung mindestens eine der folgenden Angaben anzeigt: eine Gerichtsbarkeit der Registrierung des Fahrzeugs (12), eine Nutzungserlaubnis des Fahrzeugs (12) zur Nutzung der jeweiligen Fahrspur (L1-L7), eine Diplomatenerlaubnis zum Grenzübertritt, die Anzahl der in dem Fahrzeug (12) fahrenden Personen, eine Größe des Fahrzeugs (12), ein Gewicht des Fahrzeugs (12).

10. Verfahren nach Anspruch 8 oder 9,
wobei das Abrufen der Daten und das Bestimmen der Fahrzeuginformation während der Nutzung des Fahrzeugs (12) mehrmals durchgeführt wird.

11. Verfahren nach einem der Ansprüche 8 bis 10,
wobei das Abrufen der Daten und das Bestimmen der Fahrzeuginformation automatisch durchgeführt wird.

12. Verfahren nach einem der Ansprüche 8 bis 11,
wobei die Daten von einer Speichervorrichtung (6) des Fahrzeugs (12) abgerufen werden und in der Speichervorrichtung (6) während einer Fahrt und/oder während der Lebensdauer des Fahrzeugs (12) dynamisch aktualisiert werden.

## Revendications

1. Appareil de navigation (1) comprenant :
- un dispositif de réception de données cartographiques (5) qui est destiné à recevoir des données cartographiques contenant des informations qui concernent des voies (L1 - L7) d'un tronçon terminal du type à voies multiples (10) d'une route (15) ; dans lequel les voies (L1 - L7) possèdent une même direction de déplacement ; dans lequel le tronçon terminal du type à voies multiples (10) de la route (15) comprend un poste-frontière entre deux juridictions ; et
- un dispositif de traitement (3) qui est configuré pour déterminer des informations concernant la fluidité du trafic pour des voies individuelles parmi les voies (L1 - L7) du tronçon terminal du type à voies multiples (10) ;
- dans lequel le dispositif de traitement (3) est configuré pour extraire des informations quant aux juridictions qui sont concernées par le poste-frontière (10) et pour déterminer, pour des voies individuelles parmi les voies (L1 - L7), le fait de savoir si celles-ci sont concernées par une restriction imposée à l'utilisation des voies en question par un véhicule (12), y compris un critère de restriction imposé à une utilisation de voie pour la voie respective (L1 - L7) ;
- dans lequel le dispositif de traitement (3) est configuré pour extraire' des données et pour déterminer des informations concernant le véhicule, à partir des données qui ont été extraites, qui fournissent des indications concernant au moins une des données reprises ci-après liées à un véhicule (12) que l'utilisateur de l'appareil de navigation utilise, à savoir : une juridiction de l'enregistrement du véhicule, une autorisation d'utilisation du véhicule, le nombre de personnes dans le véhicule, une dimension du véhicule, un poids du véhicule ;
- dans lequel le dispositif de traitement (3) est configuré pour déterminer une information d'autorisation d'utilisation du véhicule pour les voies individuelles parmi les voies (L1 - L7) ; dans lequel, pour des voies auxquelles une restriction est imposée, parmi les voies (L1 - L7), la détermination prend en compte les informations concernant le véhicule, ainsi que le critère de restriction imposé à une utilisation de voie pour la voie respective ;
- dans lequel le dispositif de traitement (3) est configuré pour déterminer au moins une des voies (L1 - L7) pour son utilisation par l'utilisateur en fonction des informations concernant l'autorisation d'utilisation du véhicule et en fonction des informations concernant la fluidité du trafic qui sont déterminées pour les voies individuelles parmi les voies (L1 - L7), et pour fournir à l'utilisateur des instructions correspondantes concernant l'utilisation de la voie.

2. Appareil de navigation selon la revendication 1, dans lequel le dispositif de traitement (3) est configuré pour déterminer les informations concernant la fluidité du trafic en utilisant des données en temps réel.

3. Appareil de navigation selon l'une quelconque des revendications 1 à 2, dans lequel le dispositif de traitement (3) est configuré pour déterminer les informations concernant la fluidité du trafic à partir d'au moins une donnée choisie parmi les suivantes : des données liées à un téléphone cellulaire, des données de détection du véhicule, ainsi que des données de détection de la vitesse du véhicule.

4. Appareil de navigation selon l'une quelconque des revendications 1 à 3, dans lequel les informations concernant la fluidité du trafic fournissent des indications quant à une perte de temps pour l'utilisateur lorsque ce dernier utilise la voie respective (L1 - L7) du tronçon terminal du type à voies multiples (10).

5. Appareil de navigation selon l'une quelconque des revendications 1 à 4, dans lequel le dispositif de traitement (3) est configuré pour déterminer les informations concernant la fluidité du trafic pour une des voies (L1 - L7) en prenant en compte les informations concernant des restrictions imposées à la circulation pour une voie adjacente à ladite une voie parmi les voies (L1 - L7).

6. Appareil de navigation selon l'une quelconque des revendications 1 à 5, qui englobe en outre un dispositif de mise en mémoire (6) destiné à la mise en mémoire des données qui doivent être extraites par le dispositif de traitement (3).

7. Véhicule (12) qui comprend un dispositif de navigation (1) selon l'une quelconque des revendications précédentes.

8. Procédé comprenant les étapes constituées par :
- la réception d'informations contenant des données cartographiques (5) en ce qui concerne des voies (L1 - L7) d'un tronçon terminal du type à voies multiples (10) d'une route (15) ; dans lequel les voies (L1 - L7) possèdent une même direction de déplacement ; dans lequel le tronçon terminal du type à voies multiples (10) de la route (15) comprend un poste-frontière entre deux juridictions ;
- l'extraction d'informations quant aux juridictions qui sont concernées par le poste-frontière (10) et la détermination, pour des voies individuelles parmi les voies (L1 - L7), du fait de savoir si des restrictions sont imposées, pour les voies en question, à l'utilisation par un véhicule (12), y compris un critère de restriction imposé à une utilisation de voie pour la voie respective ;
- l'extraction de données et la détermination d'informations concernant le véhicule, à partir des données qui ont été extraites, qui fournissent des indications concernant au moins une des données reprises ci-après liées à un véhicule (12) qu'utilise l'utilisateur : une juridiction de l'enregistrement du véhicule, une autorisation d'utilisation du véhicule, le nombre de personnes dans le véhicule, une dimension du véhicule, un poids du véhicule ;
- la détermination des informations d'autorisation d'utilisation du véhicule pour les voies individuelles parmi les voies (L1 - L7) ; dans lequel, pour des voies auxquelles une restriction est imposée, parmi les voies (L1 - L7), la détermination prend en compte les informations concernant le véhicule, ainsi que le critère de restriction imposé à une utilisation de la voie pour la voie respective ;
- la détermination d'informations concernant la fluidité du trafic pour les les voies individuelles parmi les voies (L1 - L7) ; et
- la détermination d'au moins une des voies (L1 - L7), pour son utilisation par l'utilisateur en fonction des informations liées à l'autorisation d'utilisation du véhicule et en fonction des informations concernant la fluidité du trafic, ainsi que la fourniture à l'utilisateur d'une instruction correspondante qui concerne l'utilisation de la voie.

9. Procédé selon la revendication 8, dans lequel le critère de restriction imposé à l'utilisation d'une voie fournit des indications concernant au moins un élément parmi ceux indiqués ci-après : une juridiction de l'enregistrement du véhicule (12), une autorisation d'utilisation du véhicule (12) pour l'utilisation de la voie respective (L1 - L7), une autorisation diplomatique pour le franchissement de la frontière, le nombre de personnes itinérantes dans le véhicule (12), une dimension du véhicule (12), un poids du véhicule (12).

10. Procédé selon la revendication 8 à 9, dans lequel l'extraction des données et la détermination des informations concernant le véhicule sont mises en oeuvre à de multiples reprises au cours de l'utilisation du véhicule (12).

11. Procédé selon l'une quelconque des revendications 8 à 10, dans lequel l'extraction des données et la détermination des informations concernant le véhicule sont mises en œuvre de manière automatique.

12. Procédé selon l'une quelconque des revendications 8 à 11, dans lequel les données sont extraites à partir d'un dispositif de mise en mémoire (6) du véhicule (12) et sont mises à jour dans le dispositif de mise en mémoire (6) d'une manière dynamique au cours d'un déplacement et/ou au cours de la durée de vie du véhicule (12).
